# EUROPÄISCHE PATENTANMELDUNG

(11) **EP 4 475 060 A1**
(43) Veröffentlichungstag der Anmeldung: **11.12.2024**
(21) Anmeldenummer: 24180176.0
(22) Anmeldetag: 05.06.2024
(51) Int. Cl.: G06Q 30/0202, G06N 3/006, G06N 3/098

(54) **NACHFRAGEPROGNOSE MITTELS MASCHINELLEM LERNEN IN EINEM LOKALEN GLOBAL-MODELL**

(30) Priorität: 09.06.2023 LU 103146
(71) Anmelder: thyssenkrupp Materials DataflowWorks GmbH, 45143 Essen (DE); thyssenkrupp AG, 45143 Essen (DE)
(72) Erfinder: Petter, Patrick, 12621 Berlin (DE)
(74) Vertreter: thyssenkrupp Intellectual Property GmbH

(57) **Zusammenfassung**

Die vorliegende Erfindung betrifft ein Verfahren zur Erstellung einer Nachfrageprognose und damit zur Optimierung der Produktionsplanung und Vorratshaltung von Waren sowie der dazu gehörenden Logistik.

## Beschreibung

Die Erfindung betrifft ein Verfahren zur Erstellung einer Nachfrageprognose und damit zur Optimierung der Produktionsplanung und Vorratshaltung von Waren sowie der dazu gehörenden Logistik.

Durch eine möglichst genaue Nachfrageprognose ist es möglich Überproduktion und Unterproduktion zu vermeiden, die Lagerbestände zu minimieren und dennoch kürzeste Lieferzeiten zu ermöglichen. Denn je präziser die zukünftige Nachfrage vorhegesagt werden kann, um so besser kann insbesondere die Herstellung und Lagerhaltung an den zukünftigen Bedarf angepasst werden, sodass auf der einen Seite die zukünftige Nachfrage bedient werden kann, auf der anderen Seite Überproduktion und hohe Lagerhaltung vermieden werden.

Die zukünftige Nachfrage vorzusagen ist jedoch schwierig, da diese von sehr vielen Faktoren abhängt und auch kaum vorhersehbare Ereignisse Einfluss nehmen können. Daher geht der Trend dazu, die zukünftige Nachfrage eben nicht nur aus den eigenen Umsätzen der entsprechenden Produkte zu extrapolieren.

In den letzten Jahren wird zunehmend auf maschinelles Lernen für die Nachfrageprognose gesetzt. Hierbei werden insbesondere Lernmodelle XGBoost (Gradient-Boosting-Algorithmus), Random Forrest (Verwendung von Entscheidungsbäumen) und LightGBM (Gradient-Boosting-Algorithmus, Gradient-Based One-Side Sampling) verwendet. Mit Hilfe solcher Modelle ist es einfacher, schwer erkennbare Muster zu ermitteln und dadurch die Nachfrageprognose zu erhöhen.

Eine große Herausforderung ist jedoch, die relevanten Daten in ausreichendem Umfang und Qualität zur Verfügung zu stellen. Besonders vorteilhaft ist es, wenn die historischen Umsatzdaten entlang der Prozesskette verwenden zu können. Gerade für den Handelsbereich ist es somit vorteilhaft sowohl Daten seitens der Hersteller (Zulieferer) und der Kunden zu haben und zu verwenden. Aus verschiedenen Gründen, welche auch im Wettbewerbsrecht und Kartellrecht liegen, ist es natürlich nicht einfach möglich, diese Daten einfach zu sammeln und zusammen zu tragen, um dann mit maschinellem Lernen ein entsprechendes System zu trainieren. Als weiteres Problem tritt auf, dass die Produkte entlang der Prozesskette verändert werden und daher eine direkte Zuordnung oft schwer fällt. Beispielsweise wird im Stahlwerk ein Stahl-Coil hergestellt. Dieses dann in einem Zwischenschritt, beispielsweise bei einem Großhändler zerteilt, von einem Zulieferer dann in ein Halbzeug umgewandelt und dann von einem Hersteller beispielsweise in ein Fahrzeug eingebaut und dann als Fahrzeug an den Endkunden verkauft. Es besteht somit grob gesagt die Aufgabe, die Stahlherstellung mit der zukünftigen Nachfrage nach Fahrzeugen bestimmter Typen zu korrelieren und damit eine zuverlässige Nachfrageprognose entlang der Wertschöpfungskette zu ermöglichen. Somit hat am oben genannten Beispiel der Benzinpreis an der Tankstelle einen Einfluss auf den Absatz von Fahrzeugen und somit auch auf die Nachfrage an Stahl, wobei die konkreten Zusammenhänge nur extrem schwierig erkennbar sind und oftmals auch auf sehr verschiedenen Zeitskalen feststellbar sind. Während der Benzinpreis innerhalb eines Tages bereits (teilweise großen) Schwankungen unterliegt, ist beispielsweis die Nachfrage nach Fahrzeugen aufgrund von Investitionshöhe und Lieferzeit auf einer deutlich größeren Zeitskala. Um solche Zusammenhänge zu erkennen, werden beispielsweise die oben genannten Verfahren des maschinellen Lernens eingesetzt, wobei dieses jedoch aufgrund der nur begrenzten Daten eben nicht über die Wertschöpfungskette, sondern zumeist nur unternehmensintern und mit öffentlich verfügbaren Daten erfolgen kann.

Um aber nun die Nachfrageprognose zu verbessern, muss ein Verfahren gefunden werden, welches in für alle Beteiligten und den Gesetzgeber in zulässiger und vertrauensvoller Weise erlaubt, Daten entlang einer Prozesskette unternehmensübergreifend zu nutzen, um ein Modell zur Nachfrageprognose zu trainieren und somit eine für alle Beteiligten verbesserte Planungsgrundlage zur Verfügung zu stellen. Einer der Ansätze hierfür ist beispielsweise das föderale Lernen.

Aus Yang Qiang ET AL: "Federated Learning: Privacy and Incentive", 26. November 2020 (2020-11-26), Springer, US, XP093102223, ISBN: 978-3-030-63075-1, aus Goebel Randy ET AL: "Trustworthy Federated Learning", 29. März 2023 (2023-03-29), Springer, XP093102236, ISBN: 978-3-031-28995-8, aus QIANG YANG ET AL: "Federated Learning", [Online] 1. Januar 2019 (2019-01-01), Morgan & Claypool, XP009535889, ISBN: 978-3-030-63075-1 DOI: 10.2200/S00960ED2V01Y201910AIM043, Gefunden im Internet: URL:https://ieeexplore.ieee.org/abstract/document/8940936, aus LE TRIEU PHONG ET AL: "Privacy-Preserving Deep Learning via Additively Homomorphie Encryption", IACR, INTERNATIONAL ASSOCIATION FOR CRYPTOLOGIC RESEARCH , Bd. 20180104:045638 1. August 2017 (2017-08-01), Seiten 1-18, XP061034574, Gefunden im Internet: URL:http:// eprint.iacr.org/2017/715.pdf [gefunden am 2017-08-01] und aus GHIMIRE SUJAN ET AL: "Deep learning CNN-LSTM-MLP hybrid fusion model for feature optimizations and daily solar radiation prediction", MEASUREMENT., Bd. 202, 29. August 2022 (2022-08-29), Seite 111759, XP093102355, GB ISSN: 0263-2241, DOI: 10.1016/j.measurement. 2022.111759 Gefunden im Internet: URL:https://www.sciencedirect.com/ science/article/pii/S0263224122009629/pdfft? md5=5f0dd42a3a616165cb3cb3b9f780fe70&pid=1-s2.0- S0263224122009629-main.pdf sind allgemeine Kenntnisse zur künstlichen Intelligenz beziehungsweise dem föderalen Lernen bekannt.

Neben der theoretischen Umsetzbarkeit muss das System auch in einer für kommerzielle Prozesse relevanten Zeit zu Aussagen kommen. Daher müssen die Prozesse derart gestaltet sein, dass die Rechenzeit ausreichend kurz für eine praktische Verwendung ist.

Aufgabe der Erfindung ist es, ein System bereitzustellen, welches mit Daten aus unterschiedlichen Unternehmen trainiert werden kann, wobei die Datensicherheit und Datenhoheit gewahrt bleibt.

Gelöst wird diese Aufgabe durch Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zur Erzeugung eines Systems zur Nachfrageprognose. Genauer gesagt geht es um eine Nachfrageprognose entlang einer Prozesskette und damit firmenübergreifend. Durch die Nachfrageprognose soll die Verfügbarkeit von Rohstoffen und/oder Halbzeugen entlang einer Prozesskette sicher gestellt werden und gleichzeitig damit sowohl Überproduktion, unnötige Lagerhaltung aber eben auch Lieferengpässe vermeiden werden. Das System wird durch einen ersten föderalen Lernschritt und einen zweiten zentralen Lernschritt trainiert. Der zweite Schritt wird auf einem zentralen EDV-System durchgeführt. Der erste Schritt wird auf wenigstens einem ersten EDV-System und einem zweiten EDV-System durchgeführt. Bevorzugt können dieses auch deutlich mehr erste EDV-Systeme sein. Bevorzugt ist in jeder teilnehmenden Firma ein erstes EDV-System angeordnet, also insbesondere Zulieferer und Kunden. Durch diesen Aufbau ist es möglich, dass Daten einer Firma nur auf dem EDV-System der Firma verbleiben und somit die Sicherheit der Daten gewährleistet ist. Neben den Firmeninteressen im Rahmen von Betriebsgeheimnissen führt dieses auch dazu, dass durch den nachfolgenden Datenaustausch eben keine wettbewerbsrechtlichen oder kartellrechtlichen Verstöße entstehen. Es werden erste historische Daten und zweite historische Daten bereitgestellt. Gibt es mehr Teilnehmer, so wird vorzugsweise für jede teilnehmende Firma für das jeweilige EDV-System ein Satz historischer Daten bereitgestellt. Die ersten historischen Daten werden ausschließlich dem ersten EDV-System zur Verfügung gestellt und werden ausschließlich auf dem ersten EDV-System verarbeitet. Die zweiten historischen Daten werden ausschließlich dem zweiten EDV-System zur Verfügung gestellt und werden ausschließlich auf dem zweiten EDV-System verarbeitet. Dieses gilt analog auf für weitere historische Daten und weitere EDV-Systeme. Somit verbeiben die historischen Daten immer und ausschließlich in der Hoheit der bereitstellenden Firma. Das erste EDV-System trainiert mit den ersten Daten ein erstes Vorhersagemodell und das zweite EDV-System trainiert mit den ersten Daten ein erstes Vorhersagemodell. Das erste Vorhersagemodell weist erste Vorhersageparameter und eine erste Vorhersagegenauigkeit auf. Das zweite Vorhersagemodell weist zweite Vorhersageparameter und eine zweite Vorhersagegenauigkeit auf. Analog gilt dies auch wieder für weitere Vorhersagemodelle auf weiteren EDV-Systemen. Das erste EDV-System überträgt die ersten Vorhersageparameter und die erste Vorhersagegenauigkeit als verschlüsselte Gradienten an das zentrale EDV-System. Ebenso überträgt das zweite EDV-System die zweiten Vorhersageparameter und die zweite Vorhersagegenauigkeit als verschlüsselte Gradienten an das zentrale EDV-System. Auch dieses würde für weitere EDV-Systeme analog gelten. Das zentrale EDV-System weist einen Schwarm-Intelligenz-Layer auf. Die verschlüsselten Gradienten werden an den Schwarm-Intelligenz-Layer übergeben. Dieser Schwarm-Intelligenz-Layer dient dazu, eine Überanpassung zu verringern, die Genauigkeit zu erhöhen und die Komplexität zu reduzieren. Des Weiteren wird die Handhabbarkeit für hochdimensionale Daten verbessert. Die Ergebnisse des Schwarm-Intelligenz-Layers werden an ein erstes faltendes neuronales Netzwerk (Convolutional Neural Network, CNN) übergeben. Die Ausgabedaten des ersten faltenden neuronalen Netzwerks werden an ein zentrales langes Kurzzeitgedächtnis (Long short-term memory, LSTM) übergeben und die Ausgabedaten des zentralen langen Kurzzeitgedächnisses an ein zweites faltendes neuronales Netzwerk (Convolutional Neural Network, CNN) übergeben werden.

Das föderale Lernen verteilt sich somit auf lokale EDV-Systeme, welche zum Beispiel bei Kunden und Zulieferern sind. Diese können somit ihre eigenen Daten ohne Probleme in das jeweils eigene EDV-System einspielen. Kein Dritter erhält hierdurch Zugang zu den Originaldaten, so dass Betriebsgeheimnisse gewahrt bleiben. Da diese Daten nicht weitergegeben werden, kommt es auch nicht zu einer faktischen Marktabsprache. Nur die durch diese vom mithistorischen Daten trainierten EDV-Systemen erzeugten Daten werden, zusätzlich verschlüsselt, an das zentrale EDV-System übertragen.

Das zentrale EDV-System weist wenigstens vier Hauptebenen auf. Als erstes kommt der Schwarm-Intelligenz-Layer, anschließend ein erstes faltendes neuronales Netzwerk (CNN), dann ein langes Kurzzeitgedächtnis (LSTM) und dann ein zweites faltendes neuronales Netzwerk (CNN). Diese Kombination hat sich als besonders vorteilhaft erwiesen. Durch den Schwarm-Intelligenz-Layer werden die relevantesten Features identifiziert und die Dimensionalität der Eingabe reduziert und so die Verarbeitung beschleunigt. Das erste CNN eignet sich, um wichtige Muster in Zeitreihendaten zu erkennen, insbesondere nicht-lineare Beziehungen und komplexe Wechselwirkungen zu erkennen. Das LSTM erkennt dann besonders langfriste Abhängigkeiten und hat sich als besonders geeignet für nicht-lineare Wechselwirkungen, wie zum Beispiel den Einfluss von Werbeaktionen, die Konkurrenzsituation oder saisonale Schwankungen herausgestellt. Zusätzlich eignet sich das LSTM zur Merkmalsextraktion. Das abschließende zweite CNN verbessert die Erkennung räumlicher Muster sowie die Skalierbarkeit.

Das zentrale EDV-System kann in einer Ausbildung mit dem ersten EDV-System zusammenfallen. Alle anderen EDV-Systeme, einschließlich des zweiten EDV-Systems bleiben aber auch in dieser Ausbildung klar vom zentralen EDV-System getrennt.

In einer weiteren Ausführungsform der Erfindung verschlüsselt das erste EDV-System die Gradienten der ersten Vorhersageparameter und der ersten Vorhersagegenauigkeit mittels dem Paillier Algorithmus und überträgt die so verschlüsselten Gradienten an das zentrale EDV-System. Ebenso verschlüsselt das zweite EDV-System die Gradienten der zweiten Vorhersageparameter und der zweiten Vorhersagegenauigkeit mittels dem Paillier Algorithmus und überträgt die so verschlüsselten Gradienten an das zentrale EDV-System. Der Paillier Algorithmus hat eine Besonderheit: Er ermöglicht die Verknüpfung, beispielsweise Addition, verschlüsselter Daten im verschlüsselten Zustand. Damit können diese Informationen von allen Teilnehmern zunächst in verschlüsselter Form akkumuliert werden und erst dann entschlüsselt werden, was wiederum einen Rückschluss auf die Ursprungsdaten unmöglich macht.

In einer weiteren Ausführungsform der Erfindung verwendet der Schwarm-Intelligenz-Layer eine Merkmalsauswahl auf Basis Metaheuristik. Besonders bevorzugt wird als Metaheuristik ein Schleimpilz-Algorithmus verwendet. Der Schleimpilz-Algorithmus eignet sich besonders, um aus den übertragenen und zusammengeführten Gradienten den Suchraum zu erkunden. Hierbei kann es sich um den klassischen Schleimpilz-Algorithmus oder bevorzugt um einen verbesserten Schleimpilz-Algorithmus handeln.

In einer weiteren Ausführungsform der Erfindung wird der Schleimpilz-Algorithmus für ein K-Nearest Neighbours (KNN)-Regressor verwendet.

In einer weiteren Ausführungsform der Erfindung ist das erste faltende neuronale Netzwerk ein vierschichtiges faltendes neuronales Netzwerk. Die Verwendung gerade eines vierschichtiges faltendes neuronales Netzwerks hat sich gerade für die Nachfrageprognose als besonders geeignet herausgestellt. Durch die Kombination von vier Faltungsschichten und vier Poolingschichten werden zum einen die Fähigkeit zur Erkennung komplexer Muster optimiert und andererseits über die Poolingschichten die Dimensionalität der Merkmalskarten reduziert, was eine Überanpassung verringert.

In einer weiteren Ausführungsform der Erfindung erhält das erste faltende neuronale Netzwerk weitere Eingabedaten. Die weiteren Eingabedaten sind ausgewählt aus der Gruppe umfassend Wetterdaten, Wirtschaftsindikatoren, Produktcharakteristika, Marketinginformationen, demografische Daten.

In einer weiteren Ausführungsform der Erfindung werden die Ausgabedaten des ersten faltenden neuronalen Netzwerks vor der Übergabe in ein 1D-Array abgeflacht. Bevorzugt erfolgt diese Abflachung nach jeder Pooling-Schicht des faltenden neuronalen Netzwerks. Dieses verringert das Risiko der Überanpassung.

In einer weiteren Ausführungsform der Erfindung sind das erste faltende neuronale Netzwerk und/oder das zweite faltende neuronale Netzwerk als Kapselnetz ausgeführt. Dies stellt einen bedeutenden Unterschied zu den traditionellen faltenden neuronalen Netzwerk dar, da der Schwerpunkt auf den hierarchischen räumlichen Beziehungen liegt, was die Leistung bei Aufgaben mit komplexen räumlichen Hierarchien erheblich verbessert. Im Gegensatz zu traditionellen faltenden neuronalen Netzwerken, die oft Schwierigkeiten haben, solche komplexen Beziehungen effektiv zu modellieren, nutzen Kapselnetzwerke ihre einzigartige Architektur, um die Position und Orientierung von Merkmalen präzise zu erfassen und weiterzugeben. Die dadurch entstehenden Vorteile sind vielfältig und umfassen mehrere Aspekte. Unter anderem wird dadurch die Generalsierbarkeit verbessert, indem sie die räumlichen Beziehungen zwischen den Merkmalen nutzen, was zu einer robusteren Erkennung und Klassifizierung führt, selbst bei unterschiedlichen /variierenden Eingabedaten. An weiterer Vorteil ist die effizientere Nutzung von Trainingsdaten, da durch die genaue Modellierung der räumlichen Hierarchien die vorhandenen Informationen besser genutzt werden können. Auch zu erwähnen ist, dass Kapselnetzwerke deutlich widerstandsfähiger sind, da sie die relativen Positionen und Orientierungen der Merkmale berücksichtigen.

In einer weiteren Ausführungsform der Erfindung weist das erste faltende neuronale Netzwerk und/oder das zweite faltende neuronale Netzwerk einen Aufmerksamkeitsmechanismus auf. Die Integration von Aufmerksamkeitsmechanismen in Schichten von faltenden neuronalen Netzwerken führt zur Fokussierung auf hervorstechende Merkmale in komplexen Datensätzen. Es ist somit ein weiterer Schritt hin zu einer differenzierteren und effektiveren Mustererkennung. Durch den Aufmerksamkeitsmechanismus wird die menschliche Fokussierung auf besonders relevante Inhalte und Informationen mathematisch widergespiegelt. Durch die Fokussierung auf relevante Daten können weniger relevante Daten frühzeitig reduziert und somit die benötigte Rechenzeit reduziert werden. Der Aufmerksamkeitsmechanismus ermöglicht es dem Netzwerk, sich auf besonders relevante Merkmale zu konzentrieren und diese detaillierter zu analysieren, was zu einer präzisieren Erkennung und Klassifizierung führt. Dies im Kombination mit einem davor laufenden Schleimpilz Algorithmus ermittelt ein nahezu perfektes Subset der Merkmale, welches die höchste Relevanz auf den Forecast aufweist. Außerdem werden durch die gezielte Fokussierung auf relevante Daten unwichtige Informationen frühzeitig ausgefiltert werden. Dies reduziert die Menge an Daten, welche verarbeitet werden müssen. Außerdem senkt es die erforderliche Rechenzeit und den Energieverbrauch (in einem Fall: Reduzierung der Rechendauer von 3219.43 Minuten auf 232.17 Minuten bei einem multimodelen Forecast und eines Shapes der Features von 167; 8544). Zu erwähnen ist, dass Netzwerke mit Aufmerksamkeitsmechanismen deutlich widerstandsfähiger gegenüber Rauschen und Störungen in den Daten sind. Das ist darauf zurückzuführen, da diese sich auf die wichtigsten Informationen konzentrieren und die störenden Daten ignorieren.

In einer weiteren Ausführungsform der Erfindung ist das zentrale lange Kurzzeitgedächtnis bidirektional mit Feedback-Schleife ausgeführt. Der Einsatz von bidirektionalen lange Kurzzeitgedächtnis insbesondere zusammen mit Feedback-Mechanismen für vorangehende faltende neuronale Netzwerk-Stufen führt zur dynamischen Verfeinerung der Feature Extraktion ist ein neuartiger Ansatz, der die Anpassungsfähigkeit und Effizienz des Netzwerks bei der Verarbeitung sequentieller Daten verbessert. Bidirektionale lange Kurzzeitgedächtnis -Netzwerke verarbeiten Daten in beide Richtungen (vorwärts und rückwärts) und erfassen dadurch Kontextinformationen aus der Vergangenheit und der Zukunft. Dies führt zu einer umfassenderen und genaueren Analyse sequentieller Daten. Außerdem ermöglicht die Integration von Feedback-Mechanismen eine kontinuierliche Verfeinerung der extrahierten Merkmale. Das Netzwerk kann seine eigenen Ausgaben überprüfen und anpassen, um die Merkmalsextraktion zu optimieren und die Genauigkeit zu erhöhen. Die Kombination von bidirektionalem langen Kurzzeitgedächtnis und Feedback-Schleifen verbessert die Fähigkeit des Netzwerks, sich dynamisch an verschiedene Arten von sequentiellen Daten und wechselnde Datenmuster anzupassen. Dies macht das Netzwerk vielseitiger und robuster gegenüber unterschiedlichen Anwendungsfällen. Durch die Rückmeldung der extrahierten Merkmale an frühere Schichten kann das Netzwerk schneller konvergieren, da es kontinuierlich lernt und sich anpasst. Dies führt zu einer effizienteren Nutzung der Trainingsressourcen und einer Verkürzung der Trainingszeit. Im Allgemeinen kann man sagen, dass die Rückmeldung der extrahierten Merkmale an frühere Schichten dazu führt, dass das Netzwerk schneller konvergiert, da es kontinuierlich lernt und sich anpasst.

In einer weiteren Ausführungsform der Erfindung weist das zentrale lange Kurzzeitgedächtnis drei Schichten auf. Durch die Verwendung von drei Schichten anstelle der üblichen nur einen Schicht führt dazu, dass komplexere und langfristigere Zusammenhänge besser erkannt werden. Des Weiteren ermöglicht es eine breitere Anwendung auch für verschiedene Produkte mit unterschiedlichen Abhängigkeiten. Des Weiteren hilft dieses auch bei (zeitlich) unvollständigen Datensätzen.

In einer weiteren Ausführungsform der Erfindung ist das zweite faltende neuronale Netzwerk ein dreischichtiges faltendes neuronales Netzwerk ist. Das zweite faltende neuronale Netzwerk kann nun besonders gut räumliche Muster erkennen, was wiederum die durch das zentrale lange Kurzzeitgedächtnis erkannten zeitlichen Muster besonders effektiv ergänzt.

In einer weiteren Ausführungsform der Erfindung werden die Ausgabedaten des zweiten faltenden neuronalen Netzwerks an ein mehrschichtiges Perzeptron übergeben. Das mehrschichtige Perzeptron ist insbesondere für Regressionsaufgaben geeignet und daher gerade für die Nachfrageprognose geeignet. Somit können hier besonders gut aus den zuvor erkennten Zusammenhängen dann eine Vorhersage entwickelt werden. Gleichzeitig werden Rückkopplungsschleifen durch die Architektur vermieden. Bevorzugt ist das mehrschichtige Perzeptron ein vollkommen verbundenes mehrschichtige Perzeptron.

In einer weiteren Ausführungsform der Erfindung werden die Ausgabedaten des zweiten faltenden neuronalen Netzwerks mit Hilfe einer Flatten-Schicht in ein eindimensionales Feld geglättet.

In einer weiteren Ausführungsform der Erfindung verwendet das mehrschichtige Perzeptron neuronale Architektursuche in Kombination mit gepulsten neuronalen Netzen. Die Kombination von neuronaler Architektursuche mit gepulsten neuronalen Netzen ist positiv und führt zu Durchbrüchen bei der effizienten Echtzeitverarbeitung der Nachfrageprognose. Dies führt zu einer deutlich optimierterer Netzwerkarchitektur, da die neuronale Architektursuche dazu führt, dass die bestmögliche Netzwerkarchitektur für eine vorher gegebene Aufgabe definiert wird. Indem verschiedene Architekturen systematisch vertestet und bewertet werden, führt dies zu einer signifikanten Leistungssteigerung und Effizienz des Netzwerks.

In einer weiteren Ausführungsform der Erfindung werden als Erklärbarkeitsmerkmale LRP- (Layer-wise Relevance Propagation) und SHAP-Werte (SHapley Additive exPlanations) verwendet. Die Integration fortschrittlicher Erklärungsmöglichkeiten direkt in das Nachfrageprognosemodell trägt dazu bei, diese Modell transparenter und vertrauenswürdiger zu machen. Durch die Erklärbarkeit der Modelle können Unternehmen und Anwender die Validität der Prognosen besser einschätzen und Vertrauen in die Modellentscheidungen aufbauen. Dies ist besonders wichtig in Bereichen, in denen genaue Vorhersagen geschäftskritisch sind. Über SHAP wird versucht, die Einflussparameter zu identifizieren, die einen besonders hohen Einfluss auf das Endergebnis, also den zukünftig prognostizierten Umsatz haben und somit besonders relevant, aber auch für Abweichungen bei der Prognose besonders kritisch sind. Dieses geschieht durch Variation der Parameter zwischen verschiedenen Simulationsdurchläufen. Modelle, die ihre Entscheidungsprozesse erklären können, werden von den Nutzern eher akzeptiert und vertrauensvoll eingesetzt. Dies ist besonders wichtig, wenn die Prognosen direkte Auswirkungen auf Geschäftsentscheidungen haben. Dieses ermöglicht dann in der Zukunft genau diese Parameter zu beobachten um dass due Prognose gegebenenfalls schnell anpassen zu können. Auch LRP dient der Erkennung der relevantesten Informationen und wird bisher insbesondere in der Bildanalyse eingesetzt. Mit SHAP-Werten können die Parameter ermittelt werden, die den größten Einfluss auf das Endergebnis, also den prognostizierten zukünftigen Umsatz, haben. Dies geschieht durch die Variation der Parameter in verschiedenen Simulationsdurchläufen, wodurch die relevanten Faktoren und deren Auswirkungen auf die Prognose deutlich werden. Die Fähigkeit, die kritischsten Parameter zu identifizieren, ermöglicht es, diese Parameter kontinuierlich zu überwachen und die Prognosen bei Bedarf schnell anzupassen. Dies führt zu einer dynamischeren und genaueren Nachfrageprognose.

In einer weiteren Ausführungsform der Erfindung ist der Optimierungsalgorithmus eine adaptive Moment-Schätzung und eignet sich zur iterativen Aktualisierung. Weiter kann so die Lernraten jedes Gewichtsparameters angepasst werde, weshalb so schneller eine Konvergenz erreicht wird.

In einer weiteren Ausführungsform der Erfindung werden die Ergebnisse des zentralen EDV-Systems an das erste EDV-System und/oder das zweite EDV-System übertragen. Somit können die dezentralen einzelnen Modelle an die Erkenntnisse aus dem Gesamtsystem angepasst werden, was wiederum jedem Teilnehmer

In einer weiteren Ausführungsform der Erfindung werden die Ergebnisse des zentralen EDV-Systems vor der Übertragung mittels dem Paillier Algorithmus verschlüsselt. Hierdurch wird die Sicherheit auch bei der Rückübertragung gewährleistet und zusätzlich kann auch hier eine Einbindung in das dezentrale System in verschlüsselter Form erfolgen, sodass neben der Datensicherheit vor allem auch gewährleistet wird, dass dezentral keine Rückschlüsse auf das zentrale System oder gar die Daten der weiteren Beteiligten gezogen werden können.

In einer weiteren Ausführungsform der Erfindung weist das erste Vorhersagemodell des ersten EDV-System ein erstes lokales langes Kurzzeitgedächtnis auf. Das erste lokale lange Kurzzeitgedächtnis ist aus zwei Schichten aufgebaut. Das erste lokale lange Kurzzeitgedächtnis wird zur Erzeugung synthetischer Daten verwendet. Das erste Vorhersagemodell erzeugt erste synthetische Daten. Die ersten synthetischen Daten werden an das zentrale EDV-System übergeben. Analog sind auch die weiteren dezentralen Systeme aufgebaut. Das zweite Vorhersagemodell des zweiten EDV-System weist ein zweites lokales langes Kurzzeitgedächtnis auf. Das zweite lokale lange Kurzzeitgedächtnis ist aus zwei Schichten aufgebaut. Das zweite lokale lange Kurzzeitgedächtnis wird zur Erzeugung synthetischer Daten verwendet. Das zweite Vorhersagemodell erzeugt zweite synthetische Daten. Die zweiten synthetischen Daten werden an das zentrale EDV-System übergeben. Die Verwendung synthetischer Daten kann gerade für das Training genutzt werden, um zwar die eigentliche Information, die nicht unmittelbar erkennbaren Zusammenhänge der verschiedenen Größen zu übertragen, ohne jedoch die eigentlichen Daten, welche wettbewerbsrechtlich oder kartellrechtlich problematisch sein können, zu transferieren.

In einer weiteren Ausführungsform der Erfindung wird für die synthetischen Daten ein Ourlier-Filter, ein Similarity-Filter oder ein Overfitting Preventing verwendet.

In einer weiteren Ausführungsform der Erfindung wird als verzerrte Gradientenkompressionsmethode Top-k-Sparsification oder signSGD verwendet.

In einer weiteren Ausführungsform der Erfindung wird als föderaler Lernansatz ein Federated Learning Open Framework verwendet.

Nachfolgend ist das erfindungsgemäße Verfahren anhand eines in der Zeichnung dargestellten Ausführungsbeispiels näher erläutert.

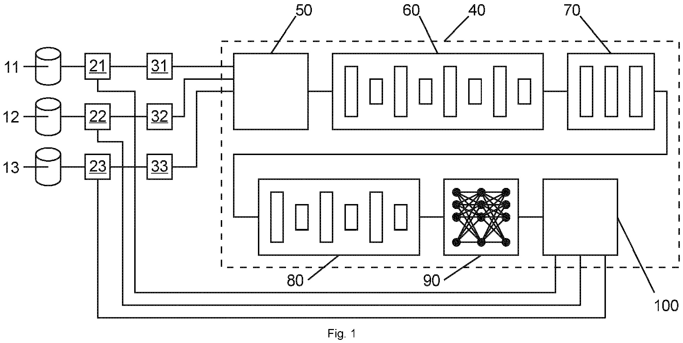

### Fig. 1 Schematische Architektur

In Fig. 1 ist das erfindungsgemäße Verfahren beispielhaft schematisch dargestellt. Zur Vereinfachung werden nur drei Parteien dargestellt, beispielsweise ein Hersteller, ein Händler und ein Abnehmer. Der Hersteller hat erste Daten 11, der Händler hat zweite Daten 12 und der Abnehmer dritte Daten 13. Ein direkter Austausch dieser Daten 11, 12, 13 ist nicht möglich, da so Betriebsgeheimnisse verraten werden würden und auch aus kartellrechtlichen Gründen wäre dieses nicht zulässig. Die Daten 11, 21, 31 verbleiben somit ausschließlich bei der jeweiligen Partei und werden nie an das zentrale EDV-System 40 übergeben. Daher werden die ersten Daten 11 an das erste EDV-System 21, die zweiten Daten 12 an das zweite EDV-System 22 und die dritten Daten 13 an das dritte EDV-System 23 übergeben. Das erste EDV-System 21 enthält ein erstes Vorhersagemodell, welches bevorzugt ein zweischichtiges langes Kurzzeitgedächtnis aufweist. Mit dem ersten Vorhersagemodell werden erste synthetische Daten erzeugt, die dann mit der erste Pallier Verschlüsselung 31 verschlüsselt an das zentrale EDV-System 40 übergeben werden. Das zweite EDV-System 22 enthält ein zweites Vorhersagemodell, welches bevorzugt ein zweischichtiges langes Kurzzeitgedächtnis aufweist. Mit dem zweiten Vorhersagemodell werden zweite synthetische Daten erzeugt, die dann mit der zweiten Pallier Verschlüsselung 32 verschlüsselt an das zentrale EDV-System 40 übergeben werden. Das dritte EDV-System 23 enthält ein drittes Vorhersagemodell, welches bevorzugt ein zweischichtiges langes Kurzzeitgedächtnis aufweist. Mit dem dritten Vorhersagemodell werden dritte synthetische Daten erzeugt, die dann mit der dritten Pallier Verschlüsselung 33 verschlüsselt an das zentrale EDV-System 40 übergeben werden.

Im zentralen EDV-System 40 können die synthetischen Daten, welche von dem ersten EDV-System 21, dem zweiten EDV-System 22 und dem dritten EDV-System 23 übertragen werden, beispielsweise noch im verschlüsselten Zustand zusammengefügt werden, sodass nach der Entschlüsselung eine nachträgliche Zuordnung zu den teilnehmenden Parteien nicht mehr möglich ist.

Im zentralen EDV-System 40 werden die Daten als erstes dem Schwarm-Intelligenz-Layer 50 zugeführt, welcher bevorzugt als Schleimpilz-Algorithmus ausgeführt ist. Hierdurch ist es besonders gut möglich, den Parameterraum zu erkunden und somit einen besonders effizienten Einstieg in die Verarbeitung zu haben.

Nach dem Schwarm-Intelligenz-Layer 50 kommt ein vierlagiges erstes faltendes neuronales Netzwerk 60. Bevorzugt erhält das erste faltende neuronale Netzwerk 60 zusätzliche Informationen, wie zum Beispiel kategorische Informationen (um beispielsweise ein Halbzeug mit einem Produkt zu verbinden), demografische Merkmale oder Marketingaktionen. Durch das das erste faltende neuronale Netzwerk 60 mit den vier Pooling-Schichten ist eine Erkennung komplexer Wechselwirkungen und eine zwischenzeitige Reduktion der Dimensionalität möglich, sodass auch komplexe Zusammenhänge effizient erkannt werden.

An das erste faltende neuronale Netzwerk 60 schließt sich ein dreilagiges zentrales langes Kurzzeitgedächtnis 70 an. Das zentrale lange Kurzzeitgedächtnis 70 eignet sich beispielsweise besonders für die Erkennung auch von Langzeitzusammenhängen.

An das zentrale lange Kurzzeitgedächtnis 70 schließt sich dann ein dreilagiges zweites faltendes neuronales Netzwerk 80 an. Hiermit sind weiter gut räumliche Muster erkennbar.

An das zweite faltende neuronale Netzwerk 80schließt sich ein dreischichtes Perzeptron 90 an, welches die eigentliche Prognose 100 bereitstellt. Die aus der Prognose 100 gewonnenen Erkenntnisse können zur Verbesserung des ersten Vorhersagemodells des ersten EDV-Systems 21, des zweiten Vorhersagemodells des zweiten EDV-Systems 22 und des dritten Vorhersagemodells des dritten EDV-Systems 23 bevorzugt verschlüsselt mittels Pallier Verschlüsselung zurückgegeben werden und so die lokalen Modelle optimieren. Somit ist ein föderales Lernen in einfacher und sicherer Weise möglich.

### Bezugszeichen

- 11: erste Daten
- 12: zweite Daten
- 13: dritte Daten
- 21: erstes EDV-System
- 22: zweites EDV-System
- 23: drittes EDV-System
- 31: erste Pallier Verschlüsselung
- 32: zweite Pallier Verschlüsselung
- 33: dritte Pallier Verschlüsselung
- 40: zentrales EDV-System
- 50: Schwarm-Intelligenz-Layer
- 60: erstes faltendes neuronales Netzwerk
- 70: zentrale lange Kurzzeitgedächtnis
- 80: zweites faltendes neuronales Netzwerk
- 90: mehrschichtiges Perzeptron
- 100: Prognose

## Patentansprüche

1. Verfahren zur Erzeugung eines Systems zur Nachfrageprognose, wobei das System durch einen ersten föderalen Lernschritt und einen zweiten zentralen Lernschritt trainiert wird, wobei der zweite Schritt auf einem zentralen EDV-System (40) durchgeführt wird, wobei der erste Schritt auf wenigstens einem ersten EDV-System (21) und einem zweiten EDV-System (22) durchgeführt wird, wobei erste historische Daten (11) und zweite historische Daten (12) bereit gestellt werden, wobei die ersten historischen Daten (11) ausschließlich dem ersten EDV-System (21) zur Verfügung gestellt werden und ausschließlich auf dem ersten EDV-System (21) verarbeitet werden, wobei die zweiten historischen Daten (12) ausschließlich dem zweiten EDV-System (22) zur Verfügung gestellt werden und ausschließlich auf dem zweiten EDV-System (22) verarbeitet werden, wobei das erste EDV-System (21) mit den ersten Daten (11) ein erstes Vorhersagemodell trainiert, wobei das zweite EDV-System (22) mit den ersten Daten (11) ein erstes Vorhersagemodell trainiert, wobei das erste Vorhersagemodell erste Vorhersageparameter und eine erste Vorhersagegenauigkeit aufweist, wobei das zweite Vorhersagemodell zweite Vorhersageparameter und eine zweite Vorhersagegenauigkeit aufweist, wobei das erste EDV-System (21) die ersten Vorhersageparameter und die erste Vorhersagegenauigkeit als verschlüsselte Gradienten an das zentrale EDV-System (40) überträgt, wobei das zweite EDV-System (22) die zweiten Vorhersageparameter und die zweite Vorhersagegenauigkeit als verschlüsselte Gradienten an das zentrale EDV-System (40) überträgt, wobei das zentrale EDV-System (40) einen Schwarm-Intelligenz-Layer (50) aufweist, wobei die verschlüsselten Gradienten an den Schwarm-Intelligenz-Layer (50) übergeben werden, wobei die Ergebnisse des Schwarm-Intelligenz-Layers (50) an ein erstes faltendes neuronales Netzwerk (60) übergeben werden, wobei die Ausgabedaten des ersten faltenden neuronalen Netzwerks (60) an ein zentrales langes Kurzzeitgedächtnis (70) übergeben werden, wobei die Ausgabedaten des zentralen langen Kurzzeitgedächtnisses (70) an ein zweites faltendes neuronales Netzwerk (80) übergeben werden.

2. Verfahren nach Anspruch 1, **dadurch gekennzeichnet, dass** das erste EDV-System (21) die Gradienten der ersten Vorhersageparameter und der ersten Vorhersagegenauigkeit mittels dem Paillier Algorithmus verschlüsselt und die so verschlüsselten Gradienten an das zentrale EDV-System (40) überträgt, wobei das zweite EDV-System (22) die Gradienten der zweiten Vorhersageparameter und der zweiten Vorhersagegenauigkeit mittels dem Paillier Algorithmus verschlüsselt und die so verschlüsselten Gradienten an das zentrale EDV-System (40) überträgt.

3. Verfahren nach einem der vorstehenden Ansprüche, **dadurch gekennzeichnet, dass** das erste faltende neuronale Netzwerk (60) weitere Eingabedaten erhält, wobei die weiteren Eingabedaten ausgewählt sind aus der Gruppe umfassend Wetterdaten, Wirtschaftsindikatoren, Produktcharakteristika, Marketinginformationen, demografische Daten,

4. Verfahren nach einem der vorstehenden Ansprüche, **dadurch gekennzeichnet, dass** die Ausgabedaten des ersten faltenden neuronalen Netzwerks (60) vor der Übergabe in ein 1D-Array abgeflacht werden.

5. Verfahren nach einem der vorstehenden Ansprüche, **dadurch gekennzeichnet, dass** das erste faltende neuronale Netzwerk (60) und/oder das zweite faltende neuronale Netzwerk (80) als Kapselnetz ausgeführt sind.

6. Verfahren nach einem der vorstehenden Ansprüche, **dadurch gekennzeichnet, dass** das erste faltende neuronale Netzwerk (60) und/oder das zweite faltende neuronale Netzwerk (80) einen Aufmerksamkeitsmechanismus aufweist.

7. Verfahren nach einem der vorstehenden Ansprüche, **dadurch gekennzeichnet, dass** das zentrale lange Kurzzeitgedächtnis (70) bidirektion mit Feedback-Schleife ausgeführt ist.

8. Verfahren nach einem der vorstehenden Ansprüche, **dadurch gekennzeichnet, dass** die Ausgabedaten des zweiten faltenden neuronalen Netzwerks (80) an ein mehrschichtiges Perzeptron (90) übergeben werden.

9. Verfahren nach Anspruch 8, **dadurch gekennzeichnet, dass** das mehrschichtige Perzeptron (90) ein vollkommen verbundenes mehrschichtige Perzeptron (90) ist.

10. Verfahren nach einem der Ansprüche 8 bis 9, **dadurch gekennzeichnet, dass** die Ausgabedaten des zweiten faltenden neuronalen Netzwerks (80) mit Hilfe einer Flatten-Schicht in ein eindimensionales Feld geglättet werden.

11. Verfahren nach einem der Ansprüche 8 bis 9, **dadurch gekennzeichnet, dass** das mehrschichtige Perzeptron (90) neuronale Architektursuche in Kombination mit gepulsten neuronalen Netzen verwendet.

12. Verfahren nach einem der vorstehenden Ansprüche, **dadurch gekennzeichnet, dass** als Erklärbarkeitsmerkmale LRP- und SHAP-Werte verwendet werden.

13. Verfahren nach einem der vorstehenden Ansprüche, **dadurch gekennzeichnet, dass** die Ergebnisse des zentralen EDV-Systems (40) an das erste EDV-System (21) und/oder das zweite EDV-System (22) übertragen werden.

14. Verfahren nach einem der vorstehenden Ansprüche, **dadurch gekennzeichnet, dass** das erste Vorhersagemodell des ersten EDV-System (21) ein erstes lokales langes Kurzzeitgedächtnis aufweist, wobei das erste lokale lange Kurzzeitgedächtnis aus zwei Schichten aufgebaut ist, wobei das erste lokale lange Kurzzeitgedächtnis zur Erzeugung synthetischer Daten verwendet wird, wobei das erste Vorhersagemodell erste synthetische Daten erzeugt, wobei die ersten synthetischen Daten an das zentrale EDV-System (40) übergeben werden, wobei das zweite Vorhersagemodell des zweiten EDV-System (22) ein zweites lokales langes Kurzzeitgedächtnis aufweist, wobei das zweite lokale lange Kurzzeitgedächtnis aus zwei Schichten aufgebaut ist, wobei das zweite lokale lange Kurzzeitgedächtnis zur Erzeugung synthetischer Daten verwendet wird, wobei das zweite Vorhersagemodell zweite synthetische Daten erzeugt, wobei die zweiten synthetischen Daten an das zentrale EDV-System (40) übergeben werden.

15. Verfahren nach einem der vorstehenden Ansprüche, **dadurch gekennzeichnet, dass** als föderaler Lernansatz ein Federated Learning Open Framework verwendet wird.
